# EUROPÄISCHE PATENTSCHRIFT

(11) **EP 2 741 167 B1**
(45) Veröffentlichungstag und Bekanntmachung des Hinweises auf die Patenterteilung: **07.10.2020**
(21) Anmeldenummer: 13005519.7
(22) Anmeldetag: 27.11.2013
(51) Int. Cl.: G06F 1/16

(54) **Tragbare Datenerfassungseinrichtung**
Portable data acquisition device
Dispositif portatif de saisie de données

(30) Priorität: 30.11.2012 DE 102012023535
(43) Veröffentlichungstag der Anmeldung: 11.06.2014
(73) Patentinhaber: Diehl Metering Systems GmbH, 90451 Nürnberg (DE)
(72) Erfinder: Bauer, Andreas, 90562 Kalchreuth (DE)
(74) Vertreter: Diehl Patentabteilung

(56) Entgegenhaltungen:
- CA-A1- 2 755 457
- US-A1- 2008 218 378
- US-A1- 2008 272 933
- MI JEONG KIM ET AL: "Living an Augmented Life by Smart Services through the Combination of Augmented Reality and Tracking & Sensing Technologies", SHB2012 -6TH INTERNATIONAL SYMPOSIUM ON SUSTAINABLE HEALTHY BUILDINGS, 27. Februar 2012 (2012-02-27), XP055107543,
- Osamu Takizawa: "RFID-based Disaster-Relief System" In: "Sustainable Radio Frequency Identification Solutions", 1. Februar 2010 (2010-02-01), InTech, Croatia, XP055107544, ISBN: 978-9-53-761974-9 Seiten 241-266, DOI: 10.5772/8018, * das ganze Dokument *

## Beschreibung

Die Erfindung betrifft eine Datenerfassungseinrichtung, umfassend eine Recheneinrichtung, ein Bedienteil und eine Kommunikationseinrichtung, die zum Empfang von wenigstens einer gesendeten Zählerinformation wenigstens einer Zählereinrichtung ausgebildet ist, die zum Erfassen eines Verbrauchs und/oder zur Kommunikation und/oder zum Sammeln erfasster Verbrauchsdaten ausgebildet ist.

Zählereinrichtungen, beispielsweise zum Messen eines Verbrauchs von Gas, Strom, Wasser oder Heizenergie müssen regelmäßig ausgelesen werden, um einen Verbrauch zu erfassen. Einige der Zählereinrichtungen sind drahtlos oder drahtgebunden in Netzwerke eingebunden und kommunizieren selbsttätig mit einer Zentraleinrichtung. Bei vielen Zählern ist es jedoch notwendig, dass sie durch Gehen einer Auslese-Tour abgelesen werden. Hier wird entweder ein auf dem Gerät angezeigter Zählerstand abgelesen oder es werden durch das Gerät gesendete Verbrauchsdaten im Vorübergehen durch ein Empfangsgerät empfangen.

Hierbei läuft oder fährt der Ausleser eine vorgegebene Route ab und empfängt über Funk die Werte der auffindbaren Zähler. Auf dieser Route können ebenso Zähleralarme behoben werden, die beispielsweise Leckage bei einem Wasserzähler betreffen. Auch Systemalarme von Fixed Network Receivern werden auf solchen Touren behoben.

Bisher wird für das Gehen einer Auslese-Tour üblicherweise ein Handheldgerät eingesetzt. Dieses empfängt Funknachrichten von Zählereinrichtungen und kann einen solchen Funkempfang akustisch signalisieren. Die empfangenen Daten werden dann beispielsweise mit Hilfe eines Mobiltelefons, mit dem eine Verbindung über Bluetooth hergestellt wird an eine Zentraleinrichtung übertragen.

Sollen mit einem solchen Gerät beispielsweise Zähleralarme erkannt werden, oder soll einer auf dem Gerät angezeigten Route gefolgt werden, so ist es notwendig, regelmäßig das Display des Geräts im Blick zu haben. Dies führt dazu, dass der Benutzer entweder regelmäßig das Gehen der Route unterbrechen muss, um anzuhalten und das Display des Geräts zu betrachten, oder während des Gehens der Route regelmäßig seine Aufmerksamkeit von der Umgebung abwenden muss, um auf das Display des Geräts zu blicken. Beides vermindert Effizienz und Komfort beim Auslesen von Zählern.

In dem Artikel "Living an Augmented Life by Smart Services through the Combination of Augmented Reality and Tracking & Sensing Technologies" von Mi Jeong Kim et al. in "SHB 2012 - 6th International Symposium on Sustainable Healthy Buildings", Seiten 205 bis 213 wird beschrieben, wie mittels eines Tablet-Computers Augmented Reality dahingehend verwirklicht werden kann, dass auf einem auf dem Tablet-Computer angezeigten Bild eines Zimmers die momentanen Energieverbrauchswerte der auf dem Bild sichtbaren Elektrogeräte angezeigt werden. Bei diesem Szenario wird bewusst ein Tablet-Computer anstatt eines am Kopf montierten Anzeigegerätes verwendet, da solche Laptop-Computer in Benutzerhaushalten bereits verbreitet sind.
Osamu Takizawa beschreibt in seinem Beitrag "RFID-based Disaster-relief System" in "Sustainable Radio Frequency Identification Solutions", herausgegeben von Cristina Turcu, InTech, Kroatien, Februar 2010, Seiten 241 bis 266 ein Informationsmitteilungs- und Schadensinformationssammel-System, bei dem über elektronische Namensschilder an Häusern mittels RFID-Technik Informationen über das Gebäude, die Bewohner und auch über Gas- und Stromverbräuche abgerufen werden können. Für das entsprechende Lesegerät wird die Verwendung eines kopfmontierten Anzeigegerätes empfohlen.

Der Erfindung liegt somit die Aufgabe zugrunde, eine Datenerfassungseinrichtung mit dem gegenüber verbessertem Benutzerkomfort anzugeben.

Die Aufgabe wird erfindungsgemäß durch eine Datenerfassungseinrichtung nach Anspruch 1 gelöst.

Der Erfindung liegt die Idee zugrunde, Zählerinformationen in das Sichtfeld des Benutzers einzublenden. Dadurch wird erreicht, dass der Benutzer stets seine Umgebung wahrnimmt, gleichzeitig jedoch mit der Umgebung überlagerte Zählerinformationen angezeigt werden. Es handelt sich also um ein Augmented Reality Konzept. Die Datenerfassungseinrichtung kann auf eine Vielzahl von unterschiedlichen Weisen ausgebildet sein. Beispielsweise kann die Anzeigevorrichtung als Brille, Helm oder am Kopf befestigtes Display ausgebildet sein. Es ist möglich, dass die gesamte Datenerfassungseinrichtung als ein einzelner Gegenstand ausgebildet ist, der am Kopf getragen wird, die Datenerfassungseinrichtung kann aber auch aus mehreren Komponenten bestehen, wobei beispielsweise nur die Anzeigevorrichtung am Kopf des Benutzers befestigt ist und ein separates Bedienteil, in das die Kommunikationseinrichtung und die Recheneinrichtung integriert sind, vorgesehen ist. Es sind jedoch auch beliebige andere Kombinationen möglich.

Zählerinformationen können auf vielfältige Weise dargestellt werden. Im einfachsten Fall wird eine Liste von Zählern und ihren Zählerinformationen mit der Umgebung überlagert dargestellt. Es ist aber beispielsweise auch möglich, Kartenausschnitte zu zeigen, auf denen die Zähler angezeigt werden. Die Zählerinformationen können jedoch auch an den Stellen angezeigt werden, an denen sich die Zählereinrichtungen im Blickfeld des Benutzers befinden würden.
Die Zählerinformationen selbst können auf vielfältige Weise dargestellt werden. So ist es möglich, Symbole darzustellen, die beispielsweise einen Zählertyp angeben oder reine Textinformationen. Durch besondere Symbole oder Farbgebungen können beispielsweise Zähler hervorgehoben werden, die noch abzulesen sind oder die alarmbehaftet sind.

Es ist auch möglich, dass dem Benutzer nur bestimmte Zähler angezeigt werden oder für verschiedene Zähler verschiedene Zählerinformationen angezeigt werden.

Es kann vorgesehen sein, dass die Bedienung der tragbaren Datenerfassungseinrichtung vollständig freihändig erfolgt, beispielsweise über eine Spracherkennung oder über eine Erkennung von Gesten des Benutzers. Es kann jedoch auch vorteilhaft sein, wenn ein separates Bediengerät vorgesehen ist. Damit kann beispielsweise eine besonders schnelle Bedienung über Funktionstasten, die Anzeige von Informationen für Dritte oder eine leichtere Bedienung für komplexe Bedienvorgänge erreicht werden.

Die erfindungsgemäße Datenerfassungseinrichtung empfängt Daten von Zählereinrichtungen ebenso wie die üblichen Handheldgeräte. Üblicherweise wird der Empfang über Wireless-M-Bus erfolgen, es sind jedoch auch eine Vielzahl anderer Protokolle denkbar. Es ist zudem vorteilhaft, wenn die Datenerfassungseinrichtung direkt mit einer Zentraleinrichtung kommunizieren kann. In diesem Fall können zum einen Zählerdaten von der Datenerfassungseinrichtung an die Zentraleinrichtung übertragen werden, zum anderen kann die Zentraleinrichtung beispielsweise Routen, abzulesende Geräte oder Wartungsaufträge an die tragbare Datenerfassungseinrichtung übermitteln, die dann dem Benutzer angezeigt werden können.

Es ist besonders vorteilhaft, wenn die Anzeigeeinrichtung zur Sichtbarmachung einer zumindest teilweise überlagerten Darstellung der Zählerinformation und der im Sichtfeld des Benutzers liegenden Umgebung des Benutzers für den Benutzer ausgebildet ist. Diese Überlagerung kann beispielsweise als frei im Raum schwebender Text oder Symbole für den Benutzer sichtbar sein. Eine solche Überlagerung kann technisch auf vielfältige Weise erreicht werden. So kann die Anzeigevorrichtung eine videobasierte Anzeigevorrichtung sein, wobei zur Sichtbarmachung der Umgebung das Bild wenigstens einer Videokamera genutzt wird, oder die Anzeigeeinrichtung kann eine teildurchsichtige Anzeigeeinrichtung sein oder die Anzeigeeinrichtung kann ein Virtual Retinal Display sein, bei dem das Bild auf die Netzhaut projiziert wird.

Wird eine videobasierte Anzeigevorrichtung genutzt, so befindet sich beim Tragen der Datenerfassungseinrichtung vor einem oder beiden Augen des Benutzers ein Display, das beispielsweise ein LED oder OLED Display sein kann. Um eine gleichzeitige Sichtbarmachung der Umgebung und der darzustellenden Information zu ermöglichen, kann die Umgebung mit einer Videokamera erfasst werden. Durch die Recheneinrichtung wird anschließend ein überlagertes Bild berechnet, in dem die Text- oder Graphikinformationen der Datenerfassungseinrichtung in das aufgenommene Umgebungsbild eingefügt werden. Dieses Bild wird dann auf der Anzeigevorrichtung dargestellt.

Häufig ist es vorteilhaft, eine teildurchsichtige Anzeigeeinrichtung zu verwenden. Hier kann beispielsweise ein Bild auf eine teilweise durchsichtige Scheibe projiziert werden, die sich beim Tragen der Datenerfassungseinrichtung vor dem Auge des Benutzers befindet. Es ist aber auch möglich, dass teildurchsichtige Displays, insbesondere LED- oder OLED-Displays genutzt werden. Insbesondere OLED-Displays können sehr dünn und durchsichtig hergestellt werden. Damit kann beispielsweise ein übliches Brillengestell genutzt werden und eines oder beide Gläser können durch ein durchsichtiges OLED-Display ersetzt werden. Es ist jedoch auch möglich, dass ein Virtual Retinal Display genutzt wird, bei dem eine Projektionseinrichtung Bilder direkt auf die Netzhaut projiziert. Damit sind keine zusätzlichen Objekt im Blickfeld des Benutzers notwendig.

Die Datenerfassungseinrichtung kann insbesondere eine Positionsbestimmungseinrichtung umfassen, die zur Bestimmung einer Position des Benutzers ausgebildet ist. Ist die Position des Benutzers bekannt, sind eine Vielzahl zusätzlicher Funktionen möglich. So können dem Benutzer zusätzliche Hinweise beim Gehen der Route gegeben werden, es können Zählereinrichtungen in der Nähe angezeigt werden, dem Benutzer kann eine Karte der Umgebung zur Verfügung gestellt werden oder es kann bei dringenden Wartungsaufträgen direkt am Gerät festgestellt werden, ob sich der Benutzer in der Nähe befindet.

Zudem ist es möglich, dass die Datenerfassungseinrichtung eine Richtungsbestimmungseinrichtung aufweist, die zur Bestimmung der Blickrichtung eines Benutzers ausgebildet ist, wobei die Recheneinrichtung zur Bestimmung eines Sichtfeld des Benutzers aus den Daten der Positionsbestimmungseinrichtung und der Richtungsbestimmungseinrichtung ausgebildet ist, wobei die Recheneinrichtung zur Auswahl von wenigstens einer von mehreren im Empfangsbereich liegenden Zählereinrichtungen, in Abhängigkeit des Sichtsfelds und von Positionen der Zählereinrichtungen, ausgebildet ist, deren Zählerinformation dargestellt wird. In diesem Fall ist es insbesondere möglich, dass dem Benutzer genau jene Zählereinrichtungen angezeigt werden, die sich in seinem momentanen Blickfeld befinden. Das Blickfeld des Benutzers soll hier so verstanden werden, dass es der Bereich ist, den der Benutzer sehen würde, wenn sich keine Hindernisse in diesem Bereich befinden würden. So befinden sich beispielsweise bei einem Benutzer, der eine Straße zwischen Häusern entlang läuft, all jene Zähler im Blickfeld, die sich in den Häusern befinden, die vor ihm liegen. Durch die Darstellung der Zählerinformationen von Zählern, die sich im Blickfeld befinden, ist die Auswahl der Zähler, die angezeigt werden, sehr intuitiv. Ein Benutzer kann sich also leicht, indem er sich umsieht, einen Überblick über die Zählereinrichtungen in seinem Umfeld verschaffen.

Es ist besonders vorteilhaft, wenn die Recheneinrichtung zur positionsgenauen Bestimmung des Orts der Darstellung einer Zählerinformation im Sichtfeld in Abhängigkeit des Sichtfelds und des Aufstellungsorts der der Zählerinformation zugeordneten Zählereinrichtung ausgebildet ist. Damit werden Zählerinformationen nicht nur dann angezeigt, wenn sich der Zähler im Sichtfeld eines Benutzers befindet, sondern auch an der Position im Sichtfeld, an der sich der Zähler im Sichtfeld befindet. Der Benutzer erhält also neben der dargestellten Zählerinformation auch Informationen über den Aufstellungsort des Zählers. Diese Art der Darstellung ist besonders intuitiv, da der Benutzer die Relativposition des Zählers zu seiner Position genauso wahrnimmt, wie er die Position anderer Objekte in seinem Umfeld wahrnimmt. Liegt beispielsweise ein Wartungsauftrag für einen Zähler vor, so ist schon bei Betreten der Straße, in der sich der Zähler befindet, das Haus und das Stockwerk zu erkennen, in dem der Zähler aufgestellt ist. Auch kann durch Auswahl der Symbole oder Farbgebung sofort ein Überblick gewonnen werden, ob Zähler bereits abgelesen sind oder ob noch Zählerinformationen empfangen werden müssen. Damit kann dem Benutzer stets schneller und intuitiv ein Überblick über die Zähler in seinem Umfeld und zugehörige Informationen, wie Wartungsaufträge oder Ableseaufträge, gegeben werden.

Es ist möglich, dass die Datenerfassungseinrichtung eine Speichereinrichtung umfasst, die zum Speichern empfangener Zählerinformationen ausgebildet ist und/oder in der mindestens eine Information der Gruppe Routendaten, Karteninformationen, Zielorte, Auftragsinformationen und Zählerinformationen, insbesondere Gerätort und/oder Wartungs- und/oder Wechseldatum, gespeichert und/oder speicherbar ist.

Das Speichern von Zählerdaten in der Datenerfassungseinrichtung erlaubt eine Datenaufnahme auch dann, wenn die Datenerfassungseinrichtung nicht in Kontakt mit einer Zentraleinrichtung ist. So ist es möglich, dass die Datenerfassungseinrichtung ausschließlich vor Beginn der Ablese-Tour mit einer Zentraleinrichtung in Verbindung steht und von dieser eine Liste abzulesener Zähler oder eine Route erhält, und nach Ende der Ablese-Tour wieder mit der Zentraleinrichtung verbunden wird, um die Zählerdaten zu übertragen. Eine Speicherung weiterer Daten wie Routendaten, Karteninformationen, Zielorte oder Auftragsinformationen erlaubt dem Benutzer einen schnellen und intuitiven Zugriff auf diese Informationen. So kann neben der Umgebung mit eingeblendeten Zählerinformationen eine zusätzliche Karte eingeblendet werden, Zielorte können auf dieser Karte markiert werden oder es können Pfeile, die die Richtung eines Zielortes angeben, in die Umgebung eingeblendet werden. Auftragsinformationen können beispielsweise als Symbole, die Auftragsorte zeigen, in die Umgebung eingeblendet werden und es können dem Benutzer Hinweise auf die zu gehende oder zu fahrende Route gegeben werden. Auch weitere Zählerinformationen wie Geräteorte, Wartungs- oder Wechseldaten oder Ähnliches können so eingebunden werden, dass sie dem Benutzer intuitiv zugänglich sind. So können auf einer Tour naheliegende Wartungs- oder Wechseldaten angezeigt werden, so dass solche Wartungs- oder Wechselaufträge beim Gehen einer Tour erledigt werden können. Ein Speichern von Geräteorten ist besonders vorteilhaft, da in diesem Fall Zählereinrichtungen dem Benutzer schon angezeigt werden können, bevor Daten von diesen Geräten empfangen wurden. Sind beispielsweise Geräteorte und Routendaten gespeichert, so kann die Datenerfassungseinrichtung den Benutzer optisch und/oder akustische beim Gehen dieser Route unterstützen und ihm zusätzlich die Orte der noch nicht abgelesenen Zählereinrichtungen im Sichtfeld einblenden und diese markieren, sobald sie abgelesen wurden. Damit sind diese Informationen sehr schnell und intuitiv greifbar.

Es ist auch möglich, dass die Recheneinrichtung zur Ermittlung bereits ausgelesener Zählereinrichtungen und die Speichereinrichtung zum Speichern einer Liste derer ausgebildet sind. Dies ermöglicht insbesondere eine bessere Visualisierung der bereits abgelesenen oder der noch abzulesenden Zählereinrichtungen.

Die Zählerinformation kann wenigstens eine Information der Gruppe Zählerstand, Alarmsignal, Gerättyp, Gerätidentifikation, Gerätzustand, Gerätort, Installationsdatum des Geräts sein oder umfassen. Häufig ist es wünschenswert, dass auch bei rein elektronischem Auslesen der Zählerstand für den Benutzer sichtbar ist. Die Anzeige eines Alarmsignals eines Zählers ist insbesondere vorteilhaft, da ein Benutzer, der sich ohnehin In der Nähe befindet, in diesem Fall den Zähler überprüfen kann und den Grund des Alarms beheben. Auch weitere Informationen wie ein Gerätetyp, die Geräteinformationen oder der Gerätezustand können sowohl den Komfort des Benutzers beim Gehen der Route erhöhen, als auch einen besseren Service beim Kunden ermöglichen. So können beispielsweise besonders lange installierte Geräte oder Geräte, bei denen erkennbar ist, dass der Gerätezustand schlecht ist, gesondert kontrolliert werden.

Es ist besonders vorteilhaft, wenn die Recheneinrichtung zur konfigurierbaren Darstellung der Zählerinformation auf der Anzeigevorrichtung ausgebildet ist. In diesem Fall kann die Darstellung an die Vorlieben des Benutzers bzw. die Bedürfnisse des Einsatzortes oder Zwecks der Datenerfassungseinrichtung angepasst werden.

Die Darstellung der Zählerinformation kann wenigstens eine Text- und/oder Zahlendarstellung umfassen. Es kann beispielsweise der Zählerstand, eine Alarminformation, wie beispielsweise ein Fehlercode, der Gerätetyp oder eine Geräteinformation, insbesondere ein Gerätezustand, eine Information über den Geräteort, wie beispielsweise die Installationshöhe des Geräts, oder ein Datum, wie ein Installationsdatum, ein Wartungsdatum oder ein Wechseldatum dargestellt werden.

Alternativ oder ergänzend ist es möglich, dass die Recheneinrichtung zur Darstellung der Zählerinformation als ein Symbol oder als ein Symbol umfassend ausgebildet ist, das insbesondere einen Typ der Zählereinrichtung bezeichnet, wobei insbesondere die Größe des Symbols durch einen Abstand zwischen Benutzer und Zählereinrichtung bestimmt ist. Die Anzeige des Typs der Zählereinrichtung gibt dem Benutzer schnell und intuitiv einen Überblick über die installierten Zählereinrichtungen. Beispielsweise können sofort Strom- und Gaszähler unterschieden werden. Auch eine Unterscheidung von reinen Zählern zum Erfassen eines Verbrauchs und Systemgeräten zur Kommunikation oder zum Sammeln von Daten ist durch diese Darstellung schnell und intuitiv möglich. Eine Skalierung der Größe der Darstellung mit dem Abstand erleichtert es dem Benutzer, Entfernungen schnell und einfach zu erkennen. Gemeinsam mit einer Darstellung an einer Stelle des Sichtfelds, die dem Installationsort entspricht, wird damit eine Darstellung des Aufstellungsortes erreicht, die besonders intuitiv verstehbar ist, da sie der alltäglichen Wahrnehmung von Objekten entspricht.
Die schnelle und einfache Erkennbarkeit von Informationen kann weiter verbessert werden, wenn zumindest ein Teil der Darstellung der Zählerinformation farbig markiert ist. So können beispielsweise alarmbehaftete Geräte rot markiert werden, nicht abgelesene und/oder zu wartende Geräte gelb und Geräte, die bereits abgelesen sind, grün. Farbe kann jedoch auch genutzt werden, um eine bessere Unterscheidung zwischen Zählertypen zu erreichen. Auch einzelne Textinformationen können farbig hervorgehoben werden, beispielsweise Fehlercodes oder Ähnliches.

Es ist auch möglich, dass Text- und/oder Zahlendarstellung nur für eine vorgegebene Zahl nächstliegender Zählereinrichtungen und/oder für Zählereinrichtungen mit einem vorgegebenen Maximalabstand angezeigt werden. Gerade in Städten, in denen die Zählerdichte sehr hoch sein kann, wäre eine Darstellung, bei der für jeden Zähler vollständige Textinformationen gezeigt werden, eher unübersichtlich. Daher kann es wünschenswert sein, die dargestellte Zählerinformation entfernungsabhängig anzupassen. Für naheliegende Zähler ist es wünschenswert, möglichst weitgehende Informationen anzuzeigen, entfernte Zähler können beispielsweise nur als Symbol dargestellt werden, so dass zwar erkennbar ist, dass dort ein Zähler ist und ob er beispielsweise alarmbehaftet, oder noch abzulesen ist, weitere Informationen sind jedoch zunächst nicht notwendig.

Es ist auch möglich, dass die Anzahl der Zählereinrichtungen, deren Zählerinformation angezeigt wird, und die Darstellung der Zählerinformation in Abhängigkeit von der Zahl der Zählereinrichtungen in einem Bereich, insbesondere innerhalb eines vorgegebenen Abstands, durch die Recheneinrichtung veränderbar ist. So kann es beispielsweise vorteilhaft sein, in Siedlungen mit einer Vielzahl von Einfamilienhäusern, in denen die Dichte von Zählereinrichtungen sehr niedrig ist, alle vorhandenen Zählereinrichtungen, auch in relativ großem Abstand, mit sehr detaillierten Informationen darzustellen. Sind jedoch Bereiche Teil der Route, in denen sich Mehrparteienhäuser befinden, in denen häufig eine Vielzahl von Zählereinrichtungen angeordnet ist, so kann eine solche Darstellung sehr unübersichtlich sein. Daher kann hier automatisch die Menge der dargestellten Zählerinformationen angepasst werden. Selbstverständlich ist es auch möglich, dass die zuvor beschriebene entfernungsabhängige Anpassung mit der dichteabhängigen Anpassung kombiniert wird.

In vielen Fällen ist eine Darstellung aller Zählereinrichtungen eines Bereichs nicht erwünscht. Wenn beispielsweise einzelne Zähler gewartet werden sollen, kann es wünschenswert sein, nur die zu wartenden Zähler anzuzeigen. Ebenso sollen auf der Ablese-Tour häufig nur die Geräte angezeigt werden, die Teil dieser Ablese-Tour sind. Daher ist es vorteilhaft, wenn die Auswahl der Zählereinrichtungen, deren Zählerinformationen dargestellt wird, recheneinrichtungsseitig oder benutzerseitig vorgegeben oder durch die Kommunikationseinrichtung empfangbar ist, wobei die Auswahl insbesondere Zählereinrichtungen umfassen kann, die auf einer Route liegen, und die eines bestimmten Typs sind, für die ein Wartungsauftrag vorliegt und/oder die alarmbehaftet sind. Eine benutzerseitige Einstellungsmöglichkeit ermöglicht es, die Datenerfassungseinrichtung an die Wünsche und Vorlieben einzelner Benutzer anzupassen. Es ist aber auch möglich, dass eine solche Auswahl beispielsweise schon bei der Festlegung der Route erfolgt und daher bereits auf der Datenerfassungseinrichtung gespeichert ist. Es kann auch vorteilhaft sein, wenn solche Daten über die Kommunikationseinrichtung empfangbar sind. In diesem Fall kann es beispielsweise möglich sein, dass automatisch von einer Zentraleinrichtung täglich Routen und Arten der Darstellung an die Datenerfassungseinrichtung übertragen werden. Damit können dem Benutzer automatisch Routen übermittelt werden und durch die Art der Darstellung kann der Benutzer auf besonders wichtige Zählereinrichtungen hingewiesen werden.

Insbesondere wenn eine benutzerseitige Konfiguration der Anzeige möglich ist, soll diese möglichst einfach und unkompliziert erfolgen. Verschiedene Benutzer haben vor allem unterschiedliche Vorlieben, wie viel Information gleichzeitig sichtbar sein soll. Es ist daher vorteilhaft, wenn der minimale Anteil des Sichtfelds, in dem die Umgebung für den Benutzer sichtbar ist, benutzerseitig vorgebbar ist, wobei die Recheneinrichtung zur automatischen Anpassung der Darstellung ausgebildet ist. Damit ist es für den Benutzer sehr leicht möglich, die Datenerfassungseinrichtung beispielsweise so einzustellen, dass stets nur die minimalen, notwendigen Informationen sichtbar sind, oder dass möglichst viel Information dargestellt wird, wobei immer noch ein Minimum des Umfeldes sichtbar Ist, um die Sicherheit sicherzustellen.

Es ist auch vorteilhaft, wenn die Recheneinrichtung zur Darstellung einer Karte durch die Anzeigevorrichtung ausgebildet ist. Insbesondere ist es vorteilhaft, wenn diese Karte um die Position des Benutzers zentriert ist. Die Karte kann auch zoom- und drehbar sein, und es können auf der Karte zu gehende Routen oder die Orte von Zählereinrichtungen markiert sein.

Zudem ist es vorteilhaft, wenn die Kommunikationseinrichtung eine bidirektionale Kommunikationsverbindung mit einer Zentraleinrichtung ermöglicht. In diesem Fall können beispielsweise Routendaten oder Wartungsaufträge von der Zentraleinrichtung an die Datenerfassungseinrichtung übertragen und durch diese dem Benutzer angezeigt werden. Auch können Zählerinformationen direkt von der Datenerfassungseinrichtung an die Zentraleinrichtung übertragen werden. Somit ist kein manueller Abgleich der Daten der Datenerfassungseinrichtung und der Zentraleinrichtung notwendig. Daneben ist es auch möglich, dass die Datenerfassungseinrichtung Kartendaten, Gerätestandorte oder weitere Zusatzinformationen von der Zentraleinrichtung abruft. Selbstverständlich können auch Zusatzinformationen wie Textnachrichten oder Anmerkungen zu gewissen Zählern über die Zählereinrichtung an einen Benutzer oder von einem Benutzer an die Zentraleinrichtung übertragen werden.

Um eine möglichst gute Integration der Datenerfassungseinrichtung in bestehende Zählerinfrastrukturen zu ermöglichen, ist es vorteilhaft, wenn die Kommunikationseinrichtung zum Empfang der Zählerinformation über Wireless-M-Bus ausgebildet ist. Selbstverständlich kann die Datenerfassungseinrichtung zusätzlich oder alternativ auch andere Kommunikationsprotokolle ermöglichen.

Es ist möglich, dass alle Bestandteile der Datenerfassungseinrichtung in die zur Befestigung am Kopf eines Benutzers ausgebildete Anzeigevorrichtung integriert sind oder dass die Datenerfassungseinrichtung aus einer Anzeige- und einer tragbaren Zentraleinheit besteht und beide Teile kabelgebunden oder kabellos verbunden sind, wobei der Bedienteil als separate tragbare Einheit, als Teil der Anzeigevorrichtung oder als Teil der Zentraleinheit ausgebildet ist. Die Datenerfassungseinrichtung kann also so ausgebildet sein, dass für den Einsatzzweck der optimale Trage- und Bedienkomfort erreicht wird.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine schematische Darstellung eines Ausführungsbeispiels einer erfindungsgemäßen Datenerfassungseinrichtung,
- Fig. 2: eine schematische Darstellung eines separaten Bedienteils einer erfindungsgemäßen Datenerfassungseinrichtung,
- Fig. 3: eine schematische Darstellung der Komponenten eines Ausführungsbeispiels einer erfindungsgemäßen Datenerfassungseinrichtung,
- Fig. 4: eine schematische Darstellung der teilweise überlagerten Darstellung von Zählerinformation und Umfeld eines Benutzers, und
- Fig. 5: eine schematische Darstellung einer weiteren überlagerten Darstellung von Zählerinformation und dem Umfeld eines Benutzers.

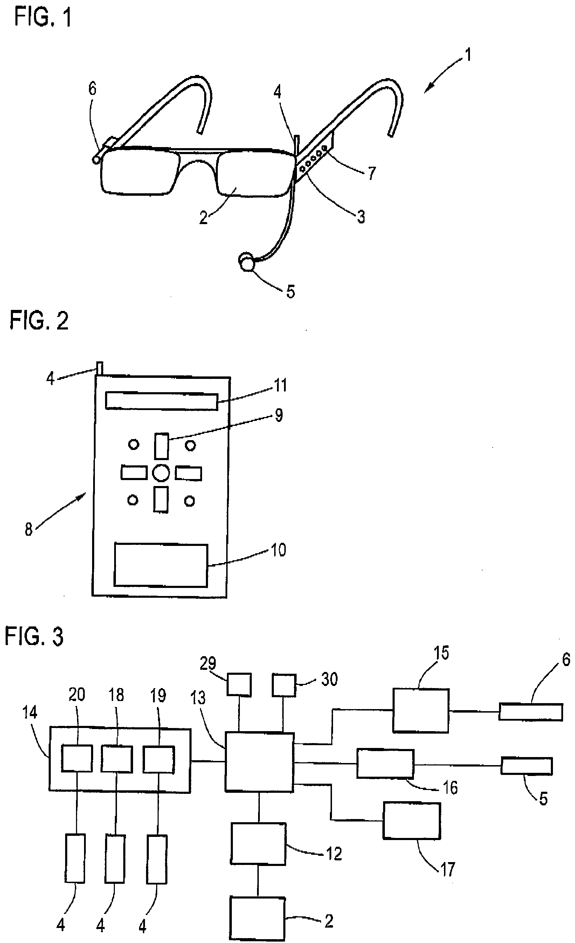

Fig. 1 zeigt eine schematische Darstellung eines Ausführungsbeispiels einer erfindungsgemäßen Datenerfassungseinrichtung. Die tragbare Datenerfassungseinrichtung 1 ist hier als Brille ausgebildet. An der Stelle der Gläser einer Brille finden sich hier halbdurchsichtige OLED-Displays 2. An einem der Bügel der Brille 1 ist die Steuerelektronik 3 angeordnet. Die Steuerelektronik 3 umfasst die Recheneinrichtung, die Kommunikationseinrichtung sowie ein Bedienteil in Form von einigen Bedienelementen 7. An der Brille 1 ist zudem eine Antenne 4 angeordnet. Diese dient zum Empfang der Zählerdaten sowie zur Kommunikation mit einer Zentraleinheit. Die Kommunikation mit der Zentraleinheit erfolgt über ein GSM- bzw. UMTS-Modem. Um eine komfortablere Bedienung der Datenerfassungseinrichtung durch einen Benutzer zu ermöglichen, ist an der Brille 1 ein Mikrofon 5 angeordnet. Mit diesem Mikrofon können Sprachkommandos des Benutzers aufgenommen werden und durch die Recheneinrichtung erkannt werden. Somit kann beispielsweise das Einblenden einer Karte oder die Änderung der Darstellung von Zählerinformationen durch Sprachkommandos erfolgen. Daneben ist an der Brille 1 auch eine Kamera 6 angeordnet. Diese kann genutzt werden, um Benutzergesten zu erkennen. So kann es beispielsweise möglich sein, durch Zeigen auf ein Symbol, das einen Zähler darstellt, nützliche Informationen zu diesem Zähler aufzurufen.

Fig. 2 zeigt ein separates Bedienteil einer Datenerfassungseinrichtung. Dieses kann mit einer Datenerfassungseinrichtung genutzt werden, die keine integrierten Bedienelemente aufweist. Alternativ ist es auch möglich, ein zusätzliches separates Bedienelement gemeinsam mit einer Datenerfassungseinrichtung zu nutzen, die bereits Bedienelemente aufweist, um eine einfachere und schnellere Bedienung zu ermöglichen. Das Bedienteil 8 weist einige Tasten 9 auf. Diese sind so angeordnet, dass eine blinde Bedienung möglich ist. Damit kann das Bedienteil beispielsweise in der Tasche getragen werden und bei notwendiger Bedienung können ohne besondere Aufmerksamkeit zu erfordern, Tasten gedrückt werden, um Funktionen auszulösen. Die Kommunikation mit der Datenerfassungseinrichtung erfolgt über die Antenne 4, wobei beispielsweise Bluetooth oder andere kurzreichweitige Verbindungsprotokolle genutzt werden können. Das Bedienteil 8 weist zudem ein Touchpad 10 auf, um komplexe Bedienvorgänge wie ein Zoomen oder Verschieben von Karten oder Ähnliches zu ermöglichen. Zudem weist das Bedienteil 8 ein Display 11 auf. Es kann beispielsweise vorteilhaft sein, einem Kunden Zählerdaten zeigen zu können. In diesem Fall wäre es unpraktisch, eine am Kopf des Benutzers befestigte Anzeigeeinrichtung abzunehmen und einem Kunden aufzusetzen. Daher ist es vorteilhaft, solche Daten auf einem zusätzlichen Display 11 anzeigen zu können.

Fig. 3 zeigt eine schematische Darstellung der Komponenten einer Datenerfassungseinrichtung. Das zentrale Element ist eine Recheneinrichtung 13. Diese kann über eine Displaysteuerung 12 ein teildurchsichtiges OLED-Display 2 ansteuern. Damit können Zählerinformationen in das Sichtfeld des Benutzers eingeblendet werden.

Die Position des Benutzers wird über einen Positionssensor 29 bestimmt. Dieser nutzt GPS-Daten zur Positionsbestimmung. Zusätzlich können auch noch die Daten von Mobilfunknetzen oder Wireless-LANs genutzt werden, um eine genauere Positionsbestimmung zu ermöglichen. Zudem ist in der Datenerfassungseinrichtung ein Richtungsbestimmungssensor 30 angeordnet. Die Richtungsbestimmung erfolgt hier durch Messung des Erdmagnetfelds.

Aus den Informationen des Positionssensors 29 und des Richtungssensors 30 wird in der Recheneinrichtung 13 das Sichtfeld des Benutzers bestimmt. Ist nun die Position einer Zählereinrichtung bekannt, entweder dadurch, dass bereits Informationen der Zählereinrichtung empfangen wurden, oder dadurch, dass die Position der Zählereinrichtung, beispielsweise als Teil einer geplanten Route, bereits gespeichert ist, so kann nun die Position der Zählereinrichtung relativ zum Benutzer und dem Sichtfeld des Benutzers bestimmt werden. So werden nur Zählereinrichtungen angezeigt, die eine festgelegte oder festlegbare Maximalentfernung vom Benutzer haben. Zudem werden auch nur Zählereinrichtungen angezeigt, die sich im Sichtfeld des Benutzers, das heißt innerhalb seines Sichtwinkels befinden, angezeigt, Die Anzeigeposition der Zählerinformationen wird ebenfalls angepasst.

Bei einer entsprechenden Einstellung der Datenerfassungseinrichtung werden also beispielsweise Zählereinrichtungen als Symbole angezeigt, deren Größe mit dem Abstand der Zählereinrichtung vom Benutzer variiert und deren Anzeigeposition den Aufstellungsort der Zählereinrichtung angibt. Damit ist für den Benutzer stets klar zu erkennen, welche Zählereinrichtungen sich in seinem Sichtfeld befinden und wo diese sind. Als Sichtfeld des Benutzers wird hier der Bereich betrachtet, den der Benutzer sehen würde, wenn sich keine Hindernisse in diesem Bereich befinden würden. Damit werden also auch Zählereinrichtungen in Innenräumen, hinter Wänden oder solche die unterirdisch angebracht sind, gezeigt.

Die Recheneinrichtung 13 ist mit einer Kommunikationseinrichtung 14 verbunden, die eine Vielzahl von Kommunikationskanälen zur Außenwelt zur Verfügung stellt. So kann über ein GSM-Modem 20 eine Verbindung mit einer Zentraleinrichtung hergestellt werden, um Zählerinformationen von der Datenerfassungseinrichtung zu der Zentraleinrichtung zu übertragen oder Informationen wie beispielsweise Kartendaten, Routendaten oder Zählerorte von der Zentraleinrichtung zu beziehen. Über das Wireless-M-Bus-Modul 18 können Zählerinformationen von Zählereinrichtungen empfangen werden. Insbesondere können Zählerstände und Alarmsignale empfangen werden, aber auch das Installationsdatum, Identifikationsnummer, Zählertyp und Gerätezustand wie beispielsweise der Ladezustand einer Batterie oder Ähnliches. Des Weiteren umfasst die Kommunikationseinrichtung 14 ein Bluetooth-Modul 19, durch das eine Verbindung zu einem separaten Bedienteil möglich ist. Durch die Verwendung eines Standard-Protokolls zur Verbindung mit dem Bedienteil können beispielsweise verschiedene Bedienteile für verschiedene Einsatzzwecke zur Verfügung gestellt werden. Das GSM-Modem 20, das Wireless-M-Bus-Modul 18 und das Bluetooth-Modul 19 sind jeweils mit einer Antenne 4 verbunden.

Die Bedienung der Datenerfassungseinrichtung erfolgt über ein Bedienpaneel 17 (z. B. das Bedienteil 8 aus Fig. 2). Zusätzlich können durch ein Stimmerkennungsmodul 16, das von einem Mikrofon 5 gespeist wird, und ein Bilderkennungsmodul 15, das durch eine Kamera 6 gespeist wird, Bediengesten und Sprachkommandos erkannt werden. Die Recheneinrichtung 13 kann gemeinsam mit dem Bilderkennungsmodul 15 auch genutzt werden, um Positions- und Richtungsinformationen zu verifizieren, den Kontrast der Darstellung an die Umgebungshelligkeit anzupassen oder besonders vorteilhafte Anzeigepositionen für die Darstellung der Zählerinformationen zu bestimmen.

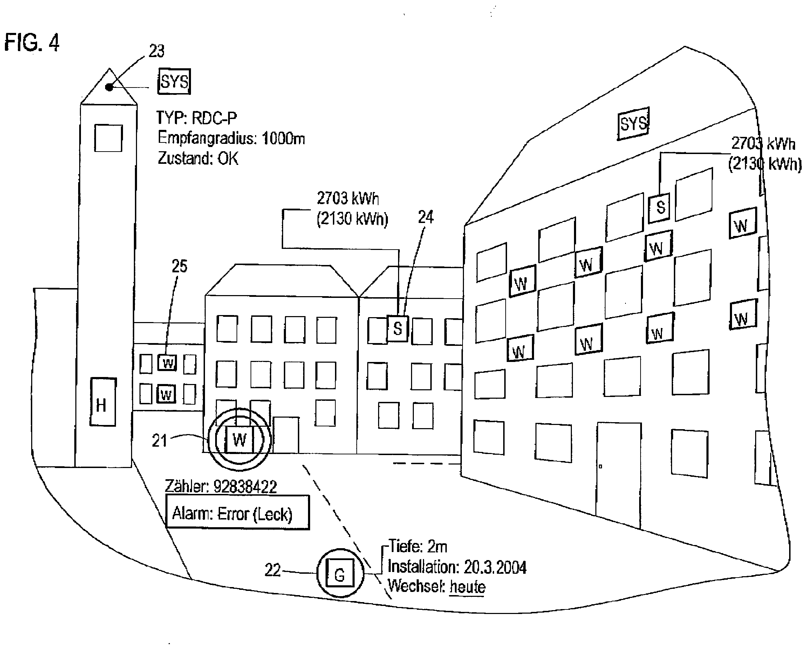

Fig. 4 zeigt eine überlagerte Darstellung von Zählerinformation und Sichtfeld des Benutzers, wie sie für einen Benutzer der Datenerfassungseinrichtung typischerweise sichtbar ist. Das Umfeld des Benutzers besteht hier aus einigen Häusern, einer Straße sowie einem Kirchturm. Kleine Rechtecke mit den Buchstaben W, S, G, H oder SYS zeigen hier die Positionen von Zählereinrichtungen an. Mit W wird ein Wasserzähler, mit S ein Stromzähler, mit G ein Gaszähler, mit H ein Zähler von Heizungsenergie und mit SYS ein Systembaustein, wie beispielsweise Receiver, Repeater oder Ähnliches angezeigt. Die Darstellung durch Buchstaben dient im Beispiel der besseren Übersichtlichkeit. In der Praxis kann stattdessen eine Darstellung als Symbol vorteilhaft sein.

Hier werden eine Vielzahl von Informationen über Zähler dargestellt. Beispielsweise wird an Punkt 23 der Ort eines Receivers markiert. Neben einem Symbol, das anzeigt, dass es sich um eine Systemkomponente handelt, hier als SYS dargestellt, wird der Typ der Komponente, der Empfangsradius sowie der Zustand dargestellt. Für die beiden Stromzähler sind jeweils der aktuelle Zählerstand sowie in Klammern der letzte abgelesene Zählerstand dargestellt. Für Stromzähler 24 ist der aktuelle Zählerstand 2703 kWh, wobei bei der letzten Ablesung ein Zählerstand von 2130 kWh vorlag. Der Gaszähler 22 ist gesondert durch einen Kreis markiert, da der Zähler 22 heute gewechselt werden soll. Da es sich um einen unterirdischen Zähler handelt, ist zur leichteren Lokalisierung zudem die Tiefe angegeben. Ergänzend ist das Installationsdatum angegeben. Die Markierung durch einen Kreis kann auch gesondert farbig hervorgehoben sein. Des Weiteren können Informationen über Fehlermeldungen angezeigt werden. So ist der Wasserzähler 21 mit einem Doppelkreis markiert, wobei diese Markierung farblich hervorgehoben sein kann. Diese Markierung zeigt das Vorliegen eines Fehlers an. Ergänzend werden hier die Zählernummer sowie die Art des Fehlers, nämlich dass es sich um ein Leck handelt, angezeigt. Somit wird der Benutzer auf seiner Route auf bereits vorliegende, oder zukünftige Probleme hingewiesen, wodurch diese behoben werden können.

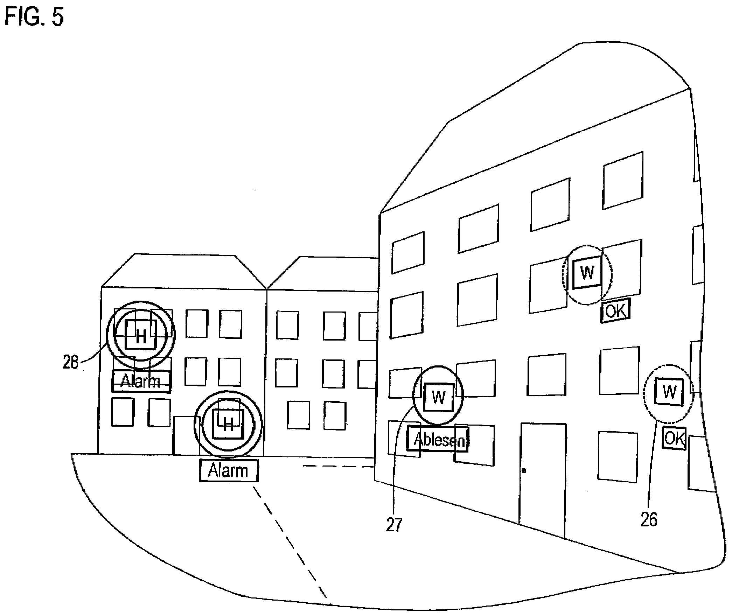

Fig. 5 zeigt eine weitere überlagerte Darstellung von der Umgebung eines Benutzers und Zählerinformationen. Hier geht der Benutzer eine Route zum Ablesen von Zählern. Wasserzähler 26 ist mit einem gestrichelten Kreis markiert, der dem Benutzer anzeigt, dass dieser Zähler bereist abgelesen ist. Der Wasserzähler 27 ist noch zu weit entfernt. Damit können noch keine Zählerinformationen empfangen werden. Daher ist dieser Zähler noch markiert, um anzuzeigen, dass er noch abgelesen werden muss. Der Heizenergiezähler 28 ist alarmbehaftet. Damit erkennt der Benutzer sofort, dass im entsprechenden Haus ein Problem mit zwei Heizzählern vorliegt.

Wie insbesondere in Fig. 4 und Fig. 5 zu sehen, erlaubt eine erfindungsgemäße Datenerfassungseinrichtung, einem Benutzer eine Vielzahl von Informationen schnell und übersichtlich zugängig zu machen. Damit werden Warnsignale von Zählern leichter erkannt, wodurch auch die Qualität der Kundenbetreuung verbessert werden kann. Insgesamt erlaubt eine erfindungsgemäße Datenerfassungseinrichtung ein effizienteres und komfortableres Ablesen und Warten von Zählern,

## Patentansprüche

1. Tragbare Datenerfassungseinrichtung, umfassend eine Recheneinrichtung (13), ein Bedienteil (8) und eine Kommunikationseinrichtung (18, 19, 20), die zum Empfang von wenigstens einer gesendeter Zählerinformation wenigstens einer Zählereinrichtung ausgebildet ist, welche zum Erfassen eines Verbrauchs und/oder zur Kommunikation und/oder zum Sammeln erfasster Verbrauchsdaten ausgebildet ist, wobei die Datenerfassungseinrichtung (1) eine zur Befestigung am Kopf eines Benutzers, in dessen Sichtfeld, ausgebildete Anzeigevorrichtung (2) umfasst, auf welcher, gesteuert über die Recheneinrichtung (13), Zählerinformationen sichtbar darstellbar sind, **dadurch gekennzeichnet,**
**dass** die Größe und Menge der dargestellten Zählerinformation, abhängig vom Abstand zwischen Benutzer und Zählereinrichtung, durch die Recheneinrichtung (13) veränderbar ist.

2. Datenerfassungseinrichtung nach Anspruch 1, **dadurch gekennzeichnet, dass** die Anzeigeeinrichtung zur Sichtbarmachung einer zumindest teilweise überlagerten Darstellung der Zählerinformation und der im Sichtfeld des Benutzers liegenden Umgebung des Benutzers für den Benutzer ausgebildet ist.

3. Datenerfassungseinrichtung nach einem der vorangehenden Ansprüche, **dadurch gekennzeichnet, dass** die Anzeigevorrichtung (2) eine videobasierte Anzeigevorrichtung ist, wobei zur Sichtbarmachung der Umgebung das Bild wenigstens einer Videokamera (6) genutzt wird, oder die Anzeigeeinrichtung (2) eine teildurchsichtige Anzeigeeinrichtung (2) ist oder die Anzeigeeinrichtung (2) ein Virtual Retinal Display ist, bei dem das Bild auf die Netzhaut projiziert wird.

4. Datenerfassungseinrichtung nach einem der Ansprüche 1 bis 3, **dadurch gekennzeichnet, dass** sie eine Positionsbestimmungseinrichtung (29), die zur Bestimmung einer Position des Benutzers ausgebildet ist, umfasst und dass insbesondere vorgesehen ist, dass die Datenerfassungseinrichtung (1) eine Richtungsbestimmungseinrichtung (30), die zur Bestimmung der Blickrichtung eines Benutzers ausgebildet ist, umfasst, wobei die Recheneinrichtung (13) zur Bestimmung eines Sichtfelds des Benutzers aus den Daten der Positionsbestimmungseinrichtung (29) und der Richtungsbestimmungseinrichtung (30) ausgebildet ist, wobei die Recheneinrichtung (13) zur Auswahl von wenigstens einer von mehreren im Empfangsbereich liegenden Zählereinrichtungen, in Abhängigkeit des Sichtfelds und von Positionen der Zählereinrichtungen, ausgebildet ist, deren Zählerinformation dargestellt wird, wobei insbesondere vorgesehen ist, dass die Recheneinrichtung (13) zur positionsgenauen Bestimmung des Ortes der Darstellung einer Zählerinformation im Sichtfeld in Abhängigkeit des Sichtfelds und des Aufstellungsorts der der Zählerinformation zugeordneten Zählereinrichtung ausgebildet ist.

5. Datenerfassungseinrichtung einem der vorangehenden Ansprüche, **dadurch gekennzeichnet, dass** diese eine Speichereinrichtung umfasst, die zum Speichern empfangener Zählerinformation ausgebildet ist, und/oder in der mindestens eine Information der Gruppe Routendaten, Karteninformationen, Zielorte, Auftragsinformationen und Zählerinformationen, insbesondere Gerätort und/oder Wartungs- und/oder Wechseldatum, gespeichert und/oder speicherbar ist, wobei insbesondere vorgesehen ist, dass die Recheneinrichtung (13) zur Ermittlung bereits ausgelesener Zählereinrichtungen und die Speichereinrichtung zum Speichern einer Liste derer ausgebildet sind.

6. Datenerfassungseinrichtung nach einem der vorangehenden Ansprüche, **dadurch gekennzeichnet, dass** die Zählerinformation wenigstens eine Information der Gruppe Zählerstand, Alarmsignal, Gerättyp, Gerätidentifikation, Gerätzustand, Gerätort, Installationsdatum des Geräts ist oder umfasst.

7. Datenerfassungseinrichtung nach einem der vorangehenden Ansprüche, **dadurch gekennzeichnet, dass** die Recheneinrichtung (13) zur konfigurierbaren Darstellung der Zählerinformation auf der Anzeigevorrichtung (2) ausgebildet ist.

8. Datenerfassungseinrichtung nach einem der vorangehenden Ansprüche, **dadurch gekennzeichnet, dass** die Darstellung der Zählerinformation wenigstens eine Text- und/oder Zahlendarstellung umfasst.

9. Datenerfassungseinrichtung nach Anspruch 8,**dadurch gekennzeichnet**, dassText- und/oder Zahlendarstellungen nur für eine vorgegebene Zahl nächstliegender Zählereinrichtungen und/oder für Zählereinrichtungen mit einem vorgegebenen Maximalabstand angezeigt werden.

10. Datenerfassungseinrichtung nach einem der vorangehenden Ansprüche, **dadurch gekennzeichnet, dass** die Recheneinrichtung zur Darstellung der Zählerinformation als ein Symbol oder als ein Symbol umfassend ausgebildet ist, das insbesondere einen Typ der Zählereinrichtung bezeichnet, wobei insbesondere die Größe des Symbols durch einem Abstand zwischen Benutzer und Zählereinrichtung bestimmt ist.

11. Datenerfassungseinrichtung nach einem der vorangehenden Ansprüche, **dadurch gekennzeichnet, dass** zumindest ein Teil der Darstellung der Zählerinformation farbig markiert ist.

12. Datenerfassungseinrichtung nach einem der vorangehenden Ansprüche, **dadurch gekennzeichnet, dass** die Anzahl der Zählereinrichtungen, deren Zählerinfomnation angezeigt wird, und die Darstellung der Zahlerinformation in Abhängigkeit von der Zahl der Zählereinrchtungen in einem Bereich, insbesondere innerhalb eines vorgegebenen Abstands, durch die Recheneinrichtung (13) veränderbar ist.

13. Datenerfassungseinrichtung nach einem der vorangehenden Ansprüche, **dadurch gekennzeichnet, dass** die Auswahl der Zahlereinrichtungen, deren Zählerinformation dargestellt wird, recheneinrichtungsseitig oder benutzerseitig vorgegeben oder durch die Kommunikationseinrichtung (18, 29, 20) empfangbar ist, wobei die Auswahl insbesondere Zählereinrichtungen umfassen kann, die auf einer Route liegen, die eines bestimmten Typs sind, für die ein Wartungsauftrag vorliegt und/oder die alarmbehaftet sind.

14. Datenerfassungseinrichtung nach einem der Ansprüche 2 bis 13, **dadurch gekennzeichnet, dass** der minimale Anteils des Sichtfeldes, in dem die Umgebung für den Benutzer sichtbar ist, benutzerseitig vorgebbar ist, wobei die Recheneinrichtung (13) zur automatischen Anpassung der Darstellung ausgebildet ist.

15. Datenerfassungseinrichtung nach einem der vorangehenden Ansprüche, **dadurch gekennzeichnet, dass** die Recheneinrichtung (13) zur Darstellung einer Karte durch die Anzeigevorrichtung (2) ausgebildet ist.

16. Datenerfassungseinrichtung nach einem der vorangehenden Ansprüche, **dadurch gekennzeichnet, dass** die Kommunikationseinrichtung (18, 19, 20) eine, insbesondere wiederholte oder andauernde, bidirektionale Kommunikationsverbindung mit einer Zentraleinrichtung insbesondere zum bevorzugt automatischen Datenabgleich und/oder zur Übertragung von Zählerdaten an die Zentraleinrichtung und von Gerätestandorten von der Zentraleinrichtung ermöglicht.

17. Datenerfassungseinrichtung nach einem der vorangehenden Ansprüche, **dadurch gekennzeichnet, dass** die Kommunikationseinrichtung (18, 19, 20) zum Empfang der Zählerinformation über Wireless M-Bus ausgebildet Ist.

18. Datenerfassungssinrichtung nach einem der vorangehenden Ansprüche, **dadurch gekennzeichnet, dass** alle Bestandteile der Datenerfassungseinrichtung (1) in die zur Befestigung am Kopf eines Benutzers ausgebildete Anzeigevorrichtung (2) integriert sind, oder dass die Datenerfassungseinrichtung (1) aus einer Anzeige- und einer tragbaren Zentraleinheit besteht und beide Teile kabelgebunden oder kabellos verbunden sind, wobei der Bedienteil als separate tragbare Einheit, als Teil der Anzeigevorrichtung (2) oder als Teil der Zentraleinheit ausgebildet Ist.

## Claims

1. Portable data capture device, comprising a computing device (13), a control unit (8) and a communication device (18, 19, 20), which is designed to receive at least one transmitted piece of meter information from at least one meter device designed to record a consumption and/or for communication and/or to collect captured consumption data, wherein the data capture device (1) comprises a display apparatus (2), designed to be mounted on the head of the user in his field of view, on which meter information are presentable in visible form under the control of the computing device (13), **characterized**
**in that** the volume and amount of the presented meter information are alterable by the computing device (13) on the basis of the distance between the user and the meter device.

2. Data capture device according to Claim 1, **characterized in that** the display device is designed to visually display an at least partially overlaid presentation of the meter information and of the surroundings of the user that are situated in the field of view of the user for the user.

3. Data capture device according to either of the preceding claims, **characterized in that** the display apparatus (2) is a video-based display apparatus, wherein the image from at least one video camera (6) is used to visually display the surroundings, or the display device (2) is a semitransparent display device (2) or the display device (2) is a virtual retinal display that results in the image being projected onto the retina.

4. Data capture device according to one of Claims 1 to 3, **characterized in that** it comprises a position determination device (29) designed to determine a position of the user and **in that** there is in particular provision for the data capture device (1) to comprise a direction determination device (30) designed to determine the line of vision of a user, wherein the computing device (13) is designed to determine a field of view of the user from the data from the position determination device (29) and the direction determination device (30), wherein the computing device (13) is designed to select at least one of multiple meter devices situated in the reception range on the basis of the field of view and of positions of the meter devices whose meter information is presented, wherein there is in particular provision for the computing device (13) to be designed for positionally accurate determination of the location of the presentation of meter information in the field of view on the basis of the field of view and the installation location of the meter device associated with the meter information.

5. Data capture device according to one of the preceding claims, **characterized in that** it comprises a memory device that is designed to store received meter information and/or in which at least one piece of information from the group comprising route data, map information, destinations, contract information and meter information, in particular appliance location and/or maintenance and/or switchover date, is stored and/or storable, wherein there is in particular provision for the computing device (13) to be designed to ascertain already read meter devices and for the memory device to be designed to store a list thereof.

6. Data capture device according to one of the preceding claims, **characterized in that** the meter information is or comprises at least one piece of information from the group comprising meter reading, alert signal, appliance type, appliance identification, appliance condition, appliance location, installation date of the appliance.

7. Data capture device according to one of the preceding claims, **characterized in that** the computing device (13) is designed for configurably presenting the meter information on the display apparatus (2).

8. Data capture device according to one of the preceding claims, **characterized in that** the presentation of the meter information comprises at least one textual and/or numerical presentation.

9. Data capture device according to Claim 8, **characterized in that** textual and/or numerical presentations are displayed only for a predefined number of nearest meter devices and/or for meter devices at a predefined maximum distance.

10. Data capture device according to one of the preceding claims, **characterized in that** the computing device is designed to present the meter information as a symbol or as comprising a symbol that, in particular, denotes a type of the meter device, wherein in particular the size of the symbol is determined by a distance between the user and the meter device.

11. Data capture device according to one of the preceding claims, **characterized in that** at least part of the presentation of the meter information is marked in colour.

12. Data capture device according to one of the preceding claims, **characterized in that** the number of meter devices whose meter information is displayed and the presentation of the meter information are alterable by the computing device (13) on the basis of the number of meter devices in an area, in particular within a predefined distance.

13. Data capture device according to one of the preceding claims, **characterized in that** the selection of the meter devices whose meter information is presented is predefined by the computing device or by the user or receivable by the communication device (18, 29, 20), wherein the selection can comprise in particular meter devices situated on a route that are of a specific type, for which there is a service contract and/or that have an alert.

14. Data capture device according to one of Claims 2 to 13, **characterized in that** the minimum portion of the field of view in which the surroundings are visible to the user is predefinable by the user, wherein the computing device (13) is designed to automatically adapt the presentation.

15. Data capture device according to one of the preceding claims, **characterized in that** the computing device (13) is designed to present a map by means of the display apparatus (2).

16. Data capture device according to one of the preceding claims, **characterized in that** the communication device (18, 19, 20) allows an, in particular repeated or continuous, bidirectional communication connection to a central device in particular for preferably automatic data collation and/or for transmitting meter data to the central device and appliance locations from the central device.

17. Data capture device according to one of the preceding claims, **characterized in that** the communication device (18, 19, 20) is designed to receive meter information via wireless M-bus.

18. Data capture device according to one of the preceding claims, **characterized in that** all components of the data capture device (1) are integrated in the display apparatus (2) designed to be mounted on the head of a user, or **in that** the data capture device (1) consists of a display unit and a portable central unit and both parts are connected by wire or wirelessly, wherein the control unit is in the form of a separate portable unit, in the form of part of the display apparatus (2) or in the form of part of the central unit.

## Revendications

1. Dispositif d'acquisition de données portable, comprenant un dispositif de calcul (13), une partie de commande (8) et un dispositif de communication (18, 19, 20), qui est configuré pour recevoir au moins une information de compteur envoyée d'au moins un dispositif compteur, lequel est configuré pour acquérir une consommation et/ou pour la communication et/ou pour la collecte de données de consommation acquises, le dispositif d'acquisition de données (1) comportant un arrangement d'affichage (2) configuré pour une fixation au niveau de la tête d'un utilisateur, dans son champ de vision, sur lequel, par la commande du dispositif de calcul (13), des informations de compteur peuvent être représentées de manière visible, **caractérisé en ce que** la taille et la quantité des informations de compteur représentées peuvent être modifiées par le dispositif de calcul (13) en fonction de l'écart entre l'utilisateur et le dispositif compteur.

2. Dispositif d'acquisition de données selon la revendication 1, **caractérisé en ce que** le dispositif d'affichage est configuré pour la visualisation par l'utilisateur d'une représentation au moins partiellement superposée des informations de compteur et de l'environnement de l'utilisateur qui se trouve dans le champ de vision de l'utilisateur.

3. Dispositif d'acquisition de données selon l'une des revendications précédentes, **caractérisé en ce que** l'arrangement d'affichage (2) est un arrangement d'affichage basé sur la vidéo, l'image d'au moins une caméra vidéo (6) étant utilisée pour la visualisation de l'environnement, ou l'arrangement d'affichage (2) est un arrangement d'affichage (2) partiellement transparent ou l'arrangement d'affichage (2) est un afficheur rétinien virtuel avec lequel l'image est projetée sur la rétine.

4. Dispositif d'acquisition de données selon l'une des revendications 1 à 3, **caractérisé en ce qu'**il comporte un dispositif de détermination de position (29) qui est configuré pour déterminer une position de l'utilisateur et **en ce qu'**il est notamment prévu que le dispositif d'acquisition de données (1) comporte un dispositif de détermination de direction (30) qui est configuré pour déterminer la direction de visée d'un utilisateur, le dispositif de calcul (13) étant configuré pour déterminer un champ de vision de l'utilisateur à partir des données du dispositif de détermination de position (29) et du dispositif de détermination de direction (30), le dispositif de calcul (13) étant configuré pour sélectionner au moins l'un parmi plusieurs dispositifs compteurs se trouvant dans la zone de réception en fonction du champ de vision et des positions des dispositifs compteurs dont les informations de compteur sont représentées, en prévoyant notamment que le dispositif de calcul (13) est configuré pour une détermination avec position précise de l'endroit de la représentation d'une information de compteur dans le champ de vision en fonction du champ de vision et du lieu d'installation du dispositif compteur associé aux informations de compteur.

5. Dispositif d'acquisition de données selon l'une des revendications précédentes, **caractérisé en ce que** celui-ci comporte un dispositif de mémoire qui est configuré pour mémoriser les informations de compteur reçues, et/ou dans lequel est mémorisée et/ou peut être mémorisée au moins une information du groupe données d'itinéraire, informations cartographiques, lieux de destination, informations d'ordre et informations de compteur, notamment emplacement d'appareil et/ou date d'entretien et/ou de remplacement, en prévoyant notamment que le dispositif de calcul (13) est configuré pour identifier des dispositifs compteurs déjà relevés et le dispositif de mémoire pour mémoriser une liste de ceux-ci.

6. Dispositif d'acquisition de données selon l'une des revendications précédentes, **caractérisé en ce que** les informations de compteur sont ou comportent au moins une information du groupe valeur du compteur, signal d'alarme, type d'appareil, identification de l'appareil, état de l'appareil, lieu de l'appareil, date d'installation de l'appareil.

7. Dispositif d'acquisition de données selon l'une des revendications précédentes, **caractérisé en ce que** le dispositif de calcul (13) est configuré pour la représentation configurable des informations de compteur sur l'arrangement d'affichage (2).

8. Dispositif d'acquisition de données selon l'une des revendications précédentes, **caractérisé en ce que** la représentation des informations de compteur comprend au moins une représentation de texte et/ou de chiffres.

9. Dispositif d'acquisition de données selon la revendication 8, **caractérisé en ce que** les représentations de texte et/ou de chiffres ne sont affichées que pour un nombre prédéfini de dispositifs compteurs se trouvant les plus proches et/ou pour des dispositifs compteurs ayant un écart maximal prédéfini.

10. Dispositif d'acquisition de données selon l'une des revendications précédentes, **caractérisé en ce que** le dispositif de calcul est configuré pour représenter les informations de compteur sous la forme d'un symbole ou sous une forme comprenant un symbole, qui désigne notamment un type du dispositif compteur, la taille du symbole étant notamment déterminée par un écart entre l'utilisateur et le dispositif compteur.

11. Dispositif d'acquisition de données selon l'une des revendications précédentes, **caractérisé en ce qu'**au moins une partie de la représentation des informations de compteur est marquée en couleur.

12. Dispositif d'acquisition de données selon l'une des revendications précédentes, **caractérisé en ce que** le nombre de dispositifs compteurs dont les informations de compteur sont affichées et la représentation des informations de compteur peuvent être modifiés par le dispositif de calcul (13) en fonction du nombre de dispositifs compteurs dans une zone, notamment au sein d'un écart prédéfini.

13. Dispositif d'acquisition de données selon l'une des revendications précédentes, **caractérisé en ce que** la sélection des dispositifs compteurs dont les informations de compteur sont représentées est prédéfinie du côté du dispositif de calcul ou du côté de l'utilisateur ou peut être reçue par le dispositif de communication (18, 29, 20), la sélection pouvant notamment comprendre des dispositifs compteurs qui se trouvent sur un itinéraire, qui sont d'un type déterminé pour lesquels il existe un ordre de maintenance et/ou qui signalent une alarme.

14. Dispositif d'acquisition de données selon l'une des revendications 2 à 13, **caractérisé en ce que** la part minimale du champ de vision dans laquelle l'environnement est visible pour l'utilisateur peut être prédéfinie du côté de l'utilisateur, le dispositif de calcul (13) étant configuré pour adapter automatiquement la représentation.

15. Dispositif d'acquisition de données selon l'une des revendications précédentes, **caractérisé en ce que** le dispositif de calcul (13) est configuré pour la représentation d'une carte par l'arrangement d'affichage (2) .

16. Dispositif d'acquisition de données selon l'une des revendications précédentes, **caractérisé en ce que** le dispositif de communication (18, 19, 20) rend possible une liaison de communication bidirectionnelle, notamment répétée ou ininterrompue, avec un dispositif central, notamment en vue d'un alignement des données, de préférence automatique, et/ou pour la transmission de données de compteur au dispositif central et d'emplacements d'appareil depuis le dispositif central.

17. Dispositif d'acquisition de données selon l'une des revendications précédentes, **caractérisé en ce que** le dispositif de communication (18, 19, 20) est configuré pour recevoir les informations de compteur par le biais d'un bus M sans fil.

18. Dispositif d'acquisition de données selon l'une des revendications précédentes, **caractérisé en ce que** tous les éléments constitutifs du dispositif d'acquisition de données (1) sont intégrés dans l'arrangement d'affichage (2) configuré pour une fixation au niveau de la tête d'un utilisateur, ou **en ce que** le dispositif d'acquisition de données (1) se compose d'une unité d'affichage et d'une unité centrale portable et les deux parties sont reliées de manière filaire ou sans fil, la partie de commande étant réalisée sous la forme d'une unité portable séparée, en tant que partie de l'arrangement d'affichage (2) ou en tant que partie de l'unité centrale.
